Europäisches Patentamt

European Patent Office

Office européen des brevets

(11) Publication number: **0 165 922**
**B1**

# EUROPEAN PATENT SPECIFICATION

(45) Date of publication of patent specification: **22.02.89**

(21) Application number: **84900474.2**

(22) Date of filing: **27.12.83**

(86) International application number:
**PCT/US83/02043**

(87) International publication number:
**WO 85/02785 04.07.85 Gazette 85/15**

(51) Int. Cl.⁴: **B 01 D 46/44, F 01 N 3/08**

(54) REGENERATIVE FILTER TRAP SYSTEM WITH APPARATUS FOR DIVERTING THE EXHAUST GAS FLOW.

(43) Date of publication of application:
**02.01.86 Bulletin 86/01**

㊺ Publication of the-grant of the patent:
**22.02.89 Bulletin 89/08**

(84) Designated Contracting States:
**DE FR GB**

(56) References cited:
**SU-A- 322 513**
**US-A-1 983 304**
**US-A-2 138 001**
**US-A-2 202 272**
**US-A-2 345 530**
**US-A-2 984 315**
**US-A-3 092 206**
**US-A-3 147 097**
**US-A-3 167 400**
**US-A-3 441 381**
**US-A-4 335 574**
**US-A-4 345 923**
**US-A-4 390 355**

(73) Proprietor: **FORD MOTOR COMPANY LIMITED**
**Eagle Way**
**Brentwood Essex CM13 3BW (GB)**
㊽ **GB**

(73) Proprietor: **FORD-WERKE**
**AKTIENGESELLSCHAFT**
**Ottoplatz 2 Postfach 21 03 69**
**D-5000 Köln 21 (DE)**
㊽ **DE**

(73) Proprietor: **FORD FRANCE SOCIETE ANONYME**
**344 Avenue Napoléon Bonaparte B.P. 307**
**F-92506 Rueil Malmaison Cedex (FR)**
㊽ **FR**

(72) Inventor: **WADE, Wallace, R.**
**34156 Glouster Circle**
**Farmington Hills, MI 48018 (US)**
Inventor: **RAO, Vemulapalli, Durga, Nageswar**
**5255 Clarendon Crest**
**Bloomfield Township, MI 48013 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

The invention relates to the technology of using filter traps for extracting particulates from the exhaust gases of an internal combustion engine and, more particularly, to an automobile having improved apparatus for channelling the exhaust gases to a given zone of the particulate trap during particulate collection and away from such zone during regeneration.

Particulate emissions from an engine can be reduced with a particulate filter trap and a regeneration system to periodically clean the filter trap of particulates by incineration. Generally, durable and acceptable filters for particulate traps have been developed by the art, which have included wire mesh (see U.S. patent 3,499,269) and, more advantageously, rigid ceramics, preferably in a monolithic honeycomb cellular wall structure (see U.S. patents 4,276,071; 4,329,162 and 4,340,403).

It is important that the filter trap be cleansed periodically during vehicle operation. The prior art has heretofore envisioned that such filter traps can be cleansed by a variety of proposals, all of which have included raising the temperature of a gas flow through the filter to an incineration temperature for the particulate collection in the filter trap, the particulates then oxidize and release from the trap as a gas. Such proposals have included heating the exhaust gas to a higher temperature by either addition of hydrocarbon fuels or by engine throttling (see U.S. patents 4,167,852; 4,211,675 and 3,499,269) or have included heating a separate heat transfer medium, such as air, by electrical means or by fuel fed burners (see U.S. patents 4,270,936; 4,276,066; 4,319,896 and Japanese patent 55-19934). US-A-4,335,574 discloses a device for removing fine carbon particles from exhaust gas emitted by an internal combustion engine, comprising; a means providing a first path and a second path through which said exhaust gas may be alternately made to flow, said paths having a juncture, filter disposed in said first path and adapted to collect fine carbon particles suspended in said exhaust gas, no filter of the kind and character of said filter being disposed in said second path, heating means disposed in said first path and adapted to burn said fine carbon particles collected by and accumulated on said filter, a valve disposed at said juncture of said first and second paths and adapted to selectively open and close said first and second paths, means for indirectly detecting the amount of said fine carbon particles collected by and accumulated on said filter by detecting the amount of fuel consumed by the engine, and means for controlling the valve and the heating means together so that when the amount of said fine carbon particles collected by and accumulated on said filter has reached a predetermined amount, said valve is actuated temporarily to open said second path while said heating means is temporarily activated to burn said fine carbon particles. The heating means includes a small-sized burner attached to a holder such that a flame thereon is introduced into the inner cylinder of said filter, a glow plug for igniting the burner, a fuel tank adapted to supply fuel to the burner and a fuel pump arranged for pumping fuel from the fuel tank to the burner. US-A-2,138,001 discloses an engine driven vehicle including a water cooled internal combustion engine, a driving compartment having a floor wall and a vertically extending wall at the rear of the engine, and an exhaust pipe extending rearwardly from the engine exhaust manifold, a conduit outside the walls of said compartment and directly surrounding and following the exhaust pipe, said conduit having an air inlet positioned to receive heated air from the immediate vicinity along the exhaust manifold but leaving the main body of the engine openly exposed beyond said inlet and means for communicating suction to said conduit to draw the heated air from said exhaust manifold into and through the conduit.

During vehicle operation, the exhaust gas flow eminating from the engine operation presents a significant heated gas flow having a temperature in the range of 93—621°C (200—1150°F). The exhaust gas flow typically is laminar as it passes along a tubular exhaust pipe. An important strategy to achieve reliable regeneration is to divert the exhaust flow away from at least a first portion of the filter trap while such first portion is cleansed of the particulates that may have collected there. During such exhaust gas flow diversion, several problems have become evident with respect to providing a diverting apparatus, such problems include (a) insulating the filter trap from the vehicle particularly during regeneration; (b) minimizing the overall height of the filter trap assembly and bypass passage, while eliminating the need for other exhaust treating devices such as a muffler; and (c) assuring economical construction with ease of assembly. It would be desirable if an apparatus for channeling exhaust gas flow could be devised which solves the above listed problems.

According to the invention there is provided an automobile including an internal combustion engine and an apparatus for extracting particulates from the exhaust gas of the internal combustion engine the apparatus comprising a filter trap (15) and flow channel means for channelling the flow of the exhaust gas through at least a portion of the filter trap (15) for an extraction mode and for diverting the flow away from said portion of the filter trap (15) during a cleansing mode of said portion, said flow channel means including walls (23) defining a primary flow channel for normally guiding said exhaust gas through at least said portion of said filter trap (15), means (40) defining a diversion flow channel (39) for diverting the exhaust gases away from said portion during said cleaning mode, and flow diverter means (46) for directing the flow of exhaust gases through said primary flow channel for filtering by said trap (15) or through said diversion flow channel (39) during thermal cleaning of the trap (15) characterised in that said filter trap (15) is disposed adjacent a heat controlled zone (43) of the automobile, said walls (23) comprises a roof (42) juxtaposed said zone (43) and said diversion flow channel (39) is superimposed on the roof (42) of said walls (23) to normally insulatingly separate said primary flow channel from said zone (43).

Preferably, the walls defining the primary flow channel comprises a tube with an expanding conical inlet section, the tube having a cross-section with a height no greater than substantially one-half of its horizontal dimension, the top of the tube forming said roof.

Advantageously, the tube may be formed with a cross-section defined as the outer periphery of two spaced circular sections connected by rectangular section. The roof of said tube preferably flat extending horizontally and the diversion flow channel is defined by a generally flat wall extending over and across the roof to form the diversion flow channel therebetween.

Preferably, the means for defining the diversion flow channel comprises a single ply, U-shaped wall extending across the roof and having a cross-section area with a width to height ratio in the range of 5/1 to 20/1.

Preferably, the means defining the diversion flow channel comprises baffles to muffle the sound of gas flow therethrough during the cleaning mode, the filter trap functioning to muffle gas flow sounds during the extraction mode.

The invention will now be described further by way of example with reference to the accompanying drawings in which:

Figure 1 is a schematic illustration of an automotive diesel engine and exhaust flow apparatus;

Figure 2 is an enlarged elevational view of the filter trap and flow control means effective to channel the exhaust gas between various operative modes;

Figure 3 is a top view of the apparatus of Figure 2;

Figure 4 is a sectional view of Figure 2; and

Figure 5 is a longitudinal sectional view of a portion of the housing for the filter trap.

The apparatus employed channels the flow of the exhaust gas between a condition where the exhaust gas is carried through the filter trap for an extraction mode and a condition where the exhaust gas is bypassed around the filter trap for a trap cleaning mode. The bypassed flow of exhaust gas is channelled as a generally flat layer along the roof of the filter trap housing to serve as a thermal insulation body between the heated filter trap during regeneration and the heat controlled zone of the automobile. To enhance the use of the bypassed exhaust gas as an insulation barrier, the filter trap is provided with a cross-section having a height substantially less than the horizontal dimension; to enhance the use of the apparatus as a substitute for the conventional sound muffler on the automobile, the bypass channel has baffles to serve as a muffler during the cleaning mode while the filter trap serves as a muffler during the extraction mode.

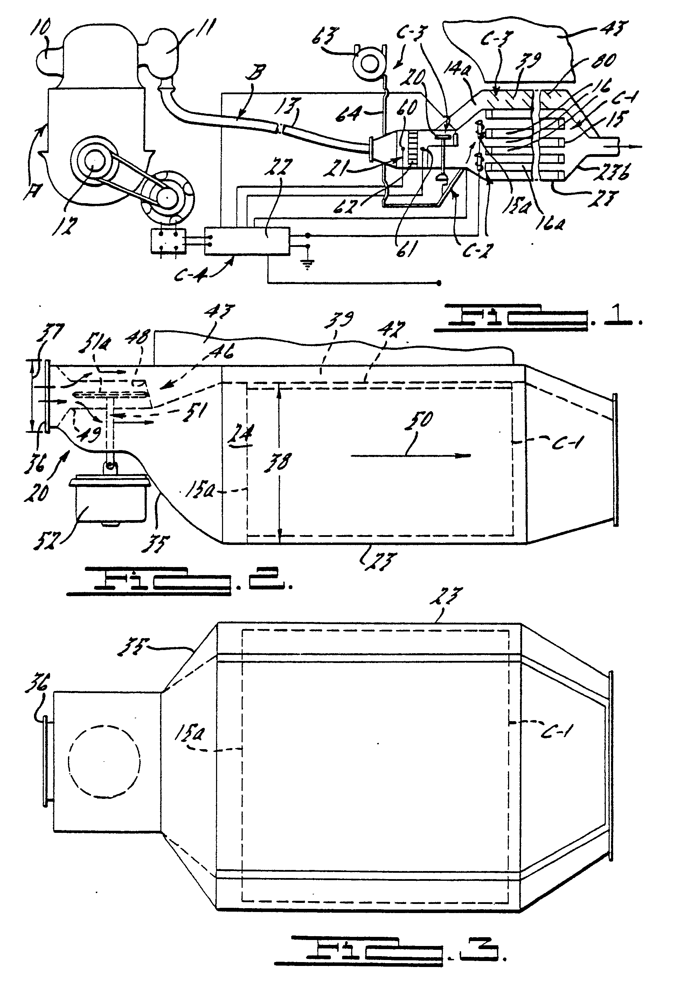

Figure 1 shows a diesel engine A having intake and exhaust manifolds 10 and 11, along with a driven output member 12. The stream of exhaust gases B is carried from the exhaust manifold 11 of the engine by an exhaust channel 13 leading away from the engine. The exhaust channel typically is of a circular cross-section promoting streamlined or laminar flow of the exhaust gases. The filtration system C is interposed in the exhaust channel 13 and includes a filter trap C-1. a heating means C-2, and a means C-3 for displacing flow of exhaust gases with another oxygen carrying fluid medium during an oxidation cycle of the particulates in the filter trap. The displacing means particularly includes an apparatus 20 for channeling exhaust gas flow between a condition where the exhaust gas is directed through the particulate filter trap for an extraction mode and a condition where the exhaust gas is diverted away from at least a first portion of the particulate filter trap during a thermal cleansing mode of the first portion. The system further includes electrical control means C-4 which broadly includes means 21 for initiating the oxidizing cycle and an electronic timer or control 22 for regulating the sequence of electrically actuated events of the oxidizing cycle.

Filter Trap

The filter trap C-1 is a monolithic ceramic honeycomb cellular structure 15 supported and contained in walls 23, a metallic housing. The front portion 35 of the housing guides the flow of exhaust gases through the front face 15a of the monolith and the trailing portion 14b of the housing guides the flow of exhaust gases from the filter trap. The trap is stationed adjacent a heat controlled zone 43 of the automobile by being hung innnmediately beneath the passenger compartment. The front face of the filter trap has an area which is greater than the cross-sectional area of the exhaust pipe 13 by a ratio of 8:l to 20:l. The monolithic ceramic honeycomb cellular structure may be similar to structures used for catalytic conversion of gases from a gasoline engine. The monolithic structure contains parallel aligned open channels 16 constituting the honeycomb cell structure; the ends of the channels are alternately blocked with high temperature ceramic cement at the front and the rear so that all of the inlet flow of gas must pass through the porous side walls 16a of the channels before exiting from the filter trap. This type of monolithic ceramic structure provides very high filtration surface area per unit of volume. For example, a 1819 cubic cms (119 cubic inch) filter trap of this type, with 16.5 cells per square cm (100 cells per square inch) and 0.43 cms (.017 inch) wall thickness, will provide approximately 1.27 square meter (1970 square inches) of filtering surface area, and the filtering surface area per unit volume for such a filter trap would be about 6.5 square cms per cubic cm (16.6 square inches per cubic inch). The channels are all aligned with the center line of the exhaust flow, when the particulates collect on the trap they will nest within the porosity of the side walls which then will space the particulate collection along the direction of flow. Thus, there will be a general uniform distribution of the particulates along the length of the trap.

Heating Means

The heating means C-2 has a heater element assembly comprising resistance elements which are continuous sheathed stainless steel nichrome resistor elements, the elements being configured in a helical fashion, much in the fashion of heating coils for a surface heating unit of a stove, and extend transversely across the flow. The resistance elements are energized by a power supply derived from the battery or alternator of the engine.

The heater element assembly also comprises foraminous plates which function as a flow diffuser, slowing down the flow for better heat transfer. The plates present a screen or grid effect which has at least a 40% open area. A flow mask or disc may also be interposed between the plates and the heating elements to guide the oxygen carrying heat transfer medium (such as air) to a peripheral location along the outer rim of the filter front face. Thus, when the transfer medium flow is sufficiently heated, ignition of the oxidizable particulates will take place substantially along the outer radial region and thus proceed both axially as well as radially inwardly as migration of the flame front proceeds through the particulate collection in the device. The airflow mask blocks off approximately 50% of the filter frontal area which will be at the central region of the flow.

The element assembly may lastly comprise a catalyzed wire mesh located as a foraminous blanket immediately downstream of the heater elements; the mesh is woven and carries a catalyst coating which is a low sulphate $SO_2$ active catalyst such as Pt/Rh on ceria.

The catalyzed wire mesh functions as a uniform heat transfer medium as well as to lower the temperature required to incinerate or ignite the particulate collection, when there is a significant amount of hydrocarbon occluded in the collected soot or particulates, thereby minimizing power requirements and lowering energy consumption. The catalyzed wire mesh also functions to collect small amounts of hydrocarbon soot during exhaust gas filtration, which soot is easily ignited and operates to transfer ignition to the particulate collection.

The power supply for the electrical resistance elements may be derived from the alternator of the engine, which alternator should have dual functions, one function being used during regeneration of the filter trap. Alternatively, an auxiliary alternator may be utilized, driven by a pulley system which in turn is driven by the output member of the engine and may be selectively engaged only during the regeneration period.

An air pump 63, when energized, drives a flow of air through a tube 64 into and through the heating means and filter when the extaust gas has been bypassed. The supply of air acts as a heat transfer medium and a supplier of oxygen to ignite and sustain the oxidation cycle.

Exhaust Gas Channeling Means

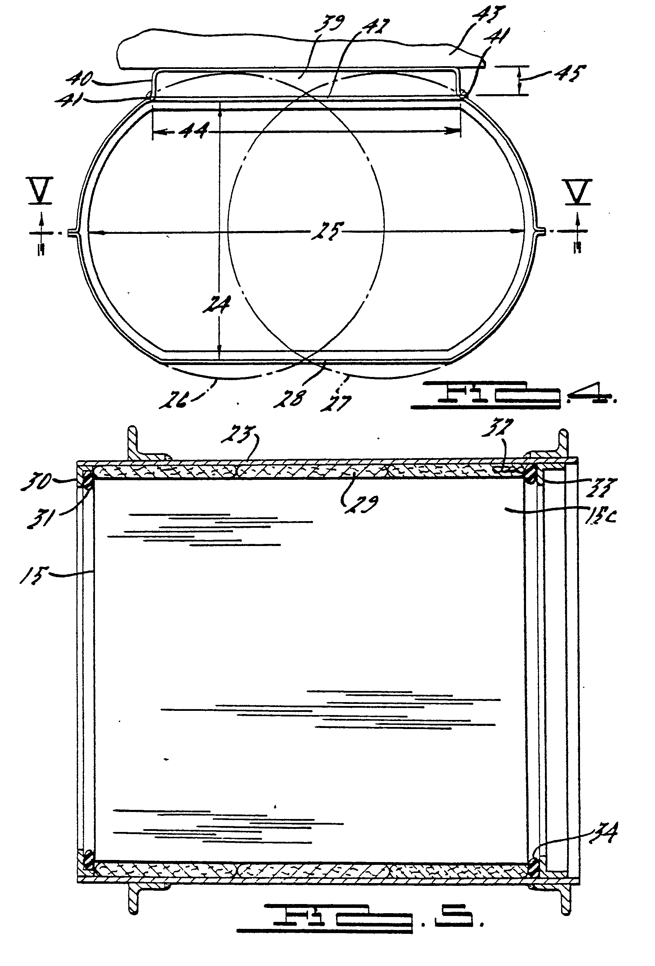

The apparatus 20 for channeling exhaust gas flow provides for a condition when the exhaust gas is carried into and through the particulate filter trap for an extraction mode, and a condition where the exhaust gas is bypassed away from at least a first portion of the particulate filter trap during a thermal cleansing mode of the particulate portion. Such apparatus 20 comprises walls 23 defining a primary flow channel for guiding the exhaust gases through at least a portion of the filter trap C-1 and preferably the entire trap. The walls 23 form a tube enclosing an internal space 24 which has a cross-section flattened along at least the upper side or roof 42 of the tube (see Figure 4). The tube here is shown to enclose an internal space having a cross-section with a height 24 no greater than two-thirds that of the width 25, and is particularly defined as the outer periphery of two spaced circular sections 26—27 connected by a rectangular section 28. The ceramic filter trap C-1 has a cross-section which is designed to snuggly fit within the interior of such primary wall configuration. As shown in Figure 5, the structure 15 of the filter trap is supported within such primary walls 23 by way of wire mesh bands 29 wrapped around the ceramic body from its front to substantially near the trailing end of the filter trap. The wire mesh bands provide a cushioned support within the housing and are inserted in such a manner as to abut against the modified L-rings 30 with a seal ring 31 therebetween. About the trailing portion 15c of the outer periphery of the ceramic filter, is packed fiberglass rope 32; the rope space is sealingly closed by a complimentary L-shaped ring 33, again having a sealing ring 34 compressed therebetween.

The walls 23 for the primary flow channel define an expanding conical section 35 proceeding from a connection 36 to the exhaust pipe 13, such expanding conical section 35 providing for a slowing down of the exhaust gas flow prior to entering the filter trap and thereby improving the filtering function. The ratio between the diameter 37 of the throat section at the immediate entrance to the conical section 35 and the diameter 38 of the frontal section 15a of the filter trap is about 1:2 to 1:3.

The apparatus 20 further comprises means defining a diversion flow channel 39 or bypass for the exhaust gases during the thermal cleaning mode. The exhaust gases in channel 39 are diverted away from the trap or portion of the trap. The channel is superimposed on the roof 42 of the walls 23 to normally insulatingly separate the primary flow channel from the zone 43. Such means comprises a single ply metallic wall 40 which is formed as an inverted U-section having its edges 41 sealingly attacted to substantially the extreme ends or edges of the flattened roof 42 of the primary walls. The diversion flow channel 39 is thereby given a cross-section which is effective to function as a thermal insulating air space between the controlled or protected temperature zone 43 of the automobile and the filter trap C-1. Preferably, the height of such diversion channel 39 provides a width (44) to height (45) ratio in the range of 5/l to 20/1. It is a general requirement for automotive vehicle design for catalyst conversion devices that an air space of about 2.5—1.25 cms (1—1/2 inches) must be defined between the controlled zone of the vehicle and the catalytic device itself. Here. such. 2.5—1.25c. (1—1/2 inches) of space is occupied by the bypass channel 39, which normally contains no gas flow during normal filter mode operation of the apparatus. The entire height or silhouette of the filtering system is minimized, thereby making maximum use of the normally required insulation space and deploying it for another purpose.

The diversion flow also contains baffles 80 which serve to muffle the sound of the exhaust gas flow therethrough during the cleaning mode, the filter trap functioning to muffle the sound of exhaust gas flow during the extraction mode.

The apparatus 20 further comprises means 46 for controlling the diversion of the flow of exhaust gases either through the expanding section 35 of the primary flow channel or through the diversion channel 39. Means 46 particularly comprises a flow diverter member having a pair of valve seats 48 and 49. each seat lying within a plane aligned with the center line of the flow 50 of the exhaust gases. Each valve seat is spaced from the other a distance no greater than one inch. The flow diversion means 46 further comprises a flow diverting valve 51 having a substantially flat valve head 51a lying within a plane also aligned with the center line of the exhaust flow 50 and operative to move linearly between a seated position against each of said respective valve seats 48—49. The member is advantageously fabricated as a casting. In an alternative arrangement, the valve stem can be biased to the direction of flow at an angle of about 30—50°. The parting plane between casting parts defining the valve seats will be midway between the valve seats which are aligned with the direction of flow at an angle of 30—60°. In this arrangement, the pressure of the flow assists opening and closing of the valve head.

The diverter valve 51 in Figure 2 is of a poppet design, wherein the valve head 51a, which is of a flat configuration having its edges provided with a pair of inverted conical sections, is normally biased to position against a first of the valve seats (here 48) to permit the filtration mode. An actuator 52, when energized moves the valve head 51a to a second position, seated against the other valve seat (here 49), for flow through the bypass channel 39. The actuator 52 of the valve may comprise a vacuum motor effective to apply a force of about 15-45 pounds.

## Electrical Conrol Means

The electrical control means C-4 has the initiator 21, preferably comprised of two pressure sensors or transducers 60 and 61. Sensor 61 is located to sense the back pressure immediately upstream of the front of the filter trap device which corrolates with the degree of particulate collection in the filter. Sensor 60 is placed in an open channel ceramic honeycomb structure 62 located considerably upstream from the filter itself, the latter containing a porosity which is much larger than that of the filter trap itself so that none of the particulates will become entrapped within the open channel hnoneycomb ceramic. The pressure sensor 60 located in or adjacent this honeycomb structure will sense a pressure simulating a clean filter trap. The sensors are each of the capacitance type with a measurable voltage output that is a function of the sensed back pressure. The voltage output is conveyed to an electronic comparator device in the control box 22; the two voltage signals are ratioed in the comparator device. When the ratio exceeds a predetermined set maximum, a signal is then relayed within the control box to initiate the regeneration or oxidizing cycle. Monitoring the refereence pressure drop across the open channel ceramic honeycomb structure 62 will always provide a signal proportional to the clean trap pressure drop for the instantaneous exhaust flow rate. Dividing the actual trap pressure drop by a constant multiplied by the reference pressure drop will provide an electrical signal proportional to the trap loading, which is independent of engine speed, engine load, and exhaust temperature. Thus, when the trap loading is greater than the allowable limit, an electrical signal will be provided to initiate the regeneration process.

The control box 22 has an electronic timer which, when it receives a signal from the comparator, will actuate several timed electrical events in sequence. The timed events include the following: (1) the actuator to open bypass channel 39 is energized substantially simultaneously with the connection of the heating elements to a power source; (2) the air pump means 63 is actuated to transmit a supply of air to the internal space 24 when the heating coils reach 760°C (1400°F) (3) disconnecting the power supply from the heater elements at about one-half of the total oxidizing cycle time; and (4) cessation of the air pump means and deactivation of the diverter valve at the completion of the full oxidizing cycle time or when oxidation is stable and self-sustaining.

## Claims

1. An automobile including an internal combustion engine and an apparatus for extracting particulates from the exhaust gas of the internal combustion engine, the apparatus comprising a filter trap (15) and flow channel means for channelling the flow of the exhaust gas through at least a portion of the filter trap (15) for an extraction mode and for diverting the flow away from said portion of the filter trap (15) during a cleansing mode of said portion, said flow channel means including walls (23) defining a primary flow channel for normally guiding said exhaust gas through at least said portion of said filter trap (15), means (40) defining a diversion flow channel (39) for diverting the exhaust gases away from said portion during said cleaning mode, and flow diverter means (46) for directing the flow of exhaust gases through said primary flow channel for filtering by said trap (15) or through said diversion flow channel (39) during thermal cleaning of the trap (15) characterised in that said filter trap (15) is disposed adjacent a heat controlled zone (43) of the automobile, said walls (23) comprises a roof (42) juxtaposed said zone (43) and said diversion flow channel (39) is superimposed on the roof (42) of said walls (23) to normally insulatingly separate said primary flow channel from said zone (43).

2. An autombile as claimed in Claim 1 in which said walls defining said primary flow channel comprise a tube having a cross-section with a height no greater than substantially one-half of its horizontal dimension, the top of said tube forming said roof being juxtaposed to said zone.

3. An automobile as claimed in Claim 1, in which said walls defining said primary flow channel comprise a tube having a cross-section defined as the outer periphery of two spaced circular sections connected by a rectangular section.

4. An automobile as claimed in Claim 1, in which said walls defining a primary flow channel provide a generally horizontally extending flat wall defining said roof, and said means defining a diversion flow channel comprises a generally flat wall extending over and across said roof to form said diversion flow channel therebetween.

5. An automobile as claimed in Claim 1, in which said walls defining said primary flow channel comprise an expanding conical inlet section, with the outlet of said conical inlet section being greater than the cross-sectional area of the exhaust gas inlet by a ratio of 8:l to 20:l.

6. An automobile as claimed in Claim 1, in which said means defining said diversion flow channel comprises a single ply, U-shaped wall extending across said roof to form said diversion flow channel therebetween, said diversion flow channel having a cross-sectional area with a width to height ratio of 5/1 to 20/1.

7. An automobile as claimed in Claim 1, in which said means defining said diversion flow channel comprises baffles for muffling the sound of gas flow therethrough during the cleaning mode, said filter trap functioning to muffle gas flow sounds during the extraction mode.

**Patentansprüche**

1. Personenfahrzeug, umfassend einen Verbrennungsmotor und eine Vorrichtung, mit deren Hilfe Teilchen aus dem Abgas des Verbrennungsmotors extrahiert werden können, wobei die Vorrichtung einen Filterabscheider (15) sowie Strömungskanalvorrichtungen umfaßt, um den Abgasstrom durch zumindest einen Abschnitt des Filterabscheiders (15) zwecks Durchführung der Extraktionsfahrweise leiten und den Strom vom genannten Abschnitt des Filterabscheiders (15) zwecks Durchführung der Reinigungsfahrweise für den genannten Abschnitt ablenken zu können, wobei die genannten Strömungskanalvorrichtungen Wände (23), die einen primären Strömungskanal festlegen, mit dessen Hilfe normalerweise das genannte Abgas durch zumindest den genannten Abschnitt des genannten Filterabscheiders (15) geleitet werden kann, Vorrichtungen (40), die einen Ablenkströmungskanal (39) festlegen, mit dessen Hilfe der Abgasstrom während der genannten Reinigungsfahrweise vom genannten Abschnitt abgelenkt werden kann, sowie Strömungsablenkvorrichtungen (46) umfassen, mit deren Hilfe der Abgasstrom durch den genannten primären Strömungskanal, um im genannten Abscheider (15) gefiltert zu werden, oder während der thermischen Reinigung des Abscheiders (15) durch den genannten Ablenkströmungskanal (39) geleitet werden kann, dadurch gekennzeichnet, daß der genannte Filterabscheider (15) in der Nähe einer wärmegesteuerten Zone (43) des Fahrzeugs montiert ist, wobei die genannten Wände (23) ein Dach (42) neben der genannten Zone (43) umfassen, und wobei der genannte Ablenkströmungskanal (39) über dem Dach (42) der genannten Wände (23) angeordnet ist, um normalerweise für eine Isolierung zwischen dem genannten primären Strömungskanal und der genannten Zone (43) zu sorgen.

2. Personenfahrzeug gemäß Anspruch 1, wobei die genannten Wände, die den genannten primären Strömungskanal festlegen, ein Rohr umfassen, das einen Querschnitt mit einer Höhe aufweist, die im wesentlichen nicht größer als eine Hälfte seiner horizontalen Abmessung ist, wobei die Oberkante des genannten Rohrs das genannte Dach in nebeneinander vorgesehener Anordnung zur genannten Zone bildet.

3. Personenfahrzeug gemäß Anspruch 1, wobei die genannten Wände, die den genannten primären Strömungskanal festlegen, ein Rohr umfassen, das einen Querschnitt aufweist, der durch den Außenumfang von zwei mit Abstand angeordneten, kreisförmigen Querschnitten, die durch einen rechtwinkligen Querschnitt verbunden sind, festgelegt ist.

4. Personenfahrzeug gemäß Anspruch 1, wobei die genannten Wände, die einen primären Strömungskanal festlegen, eine im allgemeinen horizontal verlaufende flache Wand darstellen, die das genannte Dach festlegt, und wobei die genannten Vorrichtungen, die einen Ablenkströmungskanal festlegen, eine im allgemeinen flache Wand umfassen, die sich über das genannte Dach hinaus erstreckt, um so dazwischen den genannten Ablenkströmungskanal zu bilden.

5. Personenfahrzeug gemäß Anspruch 1, wobei die genannten Wände, die den genannten primären Strömungskanal festlegen, einen sich konisch erweiternden Eintrittsabschnitt umfassen, wobei der Austritt des genannten konischen Eintrittsabschnitts im Verhältnis 8:l bis 20:l größer als die Querschnittsfläche des Abgaseintritts ist.

6. Personenfahrzeug gemäß Anspruch 1, wobei die genannten Vorrichtungen, die den genannten Ablenkströmungskanal festlegen, eine einschichtige U-förmige Wand umfassen, die sich über das genannte Dach erstreckt, um so dazwischen den genannten Ablenkströmungskanal zu bilden, wobei der genannte Ablenkströmungskanal eine Querschnittsfläche mit einem Breite/Höhe-Verhältnis von 5/l bis 20/l aufweist.

7. Personenfahrzeug gemäß Anspruch 1, wobei die genannten Vorrichtungen, die den genannten Ablenkströmungskanal festlegen, Prallbleche umfassen, um das Gasströmungsgeräusch während der Reinigungsfahrweise zu dämpfen, wobei der genannte Filterabscheider dazu dient, das Gasströmungsgeräusch während der Extraktionsfahrweise zu dämpfen.

## Revendications

1. Automobile possédant un moteur à combustion interne et un appareil pour extraire les matières particulaires des gaz d'échappement du moteur à combustion interne, l'appareil comprenant un collecteur filtrant (15) et des moyens d'aiguillage de l'écoulement servant à faire passer le flux des gaz d'échappement à travers au moins une portion du collecteur filtrant 15 pour un mode extraction et à dévier le flux de ladite portion du collecteur filtrant (15) pendant un mode nettoyage de ladite portion, lesdits moyens d'aiguillage de l'écoulement comprenant des parois (23) qui définissent un conduit d'écoulement principal servant à faire normalement passer lesdits gaz d'échappement à travers au moins ladite portion dudit collecteur filtrant (15), des moyens (40) définissant un conduit d'écoulement de déviation (39) servant à dévier les gaz d'échappement de ladite portion pendant ledit mode nettoyage et des moyens de déviation du flux (46) servant à faire passer le flux de gaz d'échappement, soit dans ledit conduit d'écoulement principal, pour la filtration par ledit collecteur (15), soit dans ledit conduit d'écoulement de déviation (39) pendant le nettoyage thermique du collecteur (15), caractérisé en ce que ledit collecteur filtrant (15) est disposé adjacent à une zone à température contrôlée (43) de l'automobile, en ce que lesdites parois (23) comprennent un plafond (42) juxtaposé à ladite zone (43) et en ce que ledit conduit d'écoulement de déviation (39) est superposé au plafond (42) desdites parois (23) pour séparer normalement ledit conduit d'écoulement principal de ladite zone (43) en l'isolant de celle-ci.

2. Automobile selon la revendication 1, dans laquelle lesdites parois qui définissent ledit conduit d'écoulement principal comprennent un tube ayant une section transversale dont la hauteur n'est pas supérieure à environ la moitié de sa dimension horizontale, la paroi supérieure dudit tube qui forme ledit plafond étant juxtaposée à ladite zone.

3. Automobile selon la revendication 1, dans laquelle lesdites parois qui définissent le conduit d'écoulement principal comprennent un tube ayant une section transversale qui est définie par la périphérie extérieure de deux sections circulaires espacées raccordées par une section rectangulaire.

4. Automobile selon la revendication 1, dans laquelle lesdites parois qui définissent un conduit d'écoulement principal forment une paroi plate s'étendant à peu près horizontalement, qui définit ledit plafond, et lesdits moyens qui définissent un conduit d'écoulement de déviation comprennent une paroi de forme générale plate qui s'étend au-dessus et en travers dudit plafond pour former ledit conduit d'écoulement de déviation entre elle-même et le plafond.

5. Automobile selon la revendication 1, dans laquelle lesdites parois définissant ledit conduit d'écoulement principal comprennent une section d'entrée conique évasée, la sortie de ladite section d'entrée conique étant plus grande que l'aire de section transversale de l'entrée des gaz d'échappement dans un rapport de 8: 1 à 20:l.

6. Automobile selon la revendication 1, dans laquelle lesdits moyens qui définissent ledit conduit d'écoulement de déviation comprennent une paroi à une seule épaisseur, en forme de U, qui s'étend en travers dudit plafond pour former le conduit d'écoulement de déviation entre elle-même et ce plafond, ledit conduit d'écoulement de déviation ayant une surface de section possédant un rapport largeur/hauteur de 5/l à 20/l.

7. Automobile selon la revendication 1, dans laquelle lesdits moyens qui définissent ledit conduit d'écoulement de déviation comprennent des chicanes servant à atténuer le bruit du flux de gaz d'échappement qui le parcourt pendant le mode nettoyage, ledit collecteur filtrant jouant le rôle d'atténuateur des bruits du flux de gaz d'échappement pendant le mode extraction.

FIG. 1.

FIG. 2.

FIG. 3.

FIG. 4.

FIG. 5.